# EUROPEAN PATENT APPLICATION

(11) **EP 2 008 713 A2**
(43) Date of publication of application: **31.12.2008**
(21) Application number: 08157527.6
(22) Date of filing: 04.06.2008
(51) Int. Cl.: B01J 23/38, B01J 23/70, B22F 1/00

(54) **Nanoalloys in emissions control after-treatment system**

(30) Priority: 19.06.2007 US 765114
(71) Applicant: Afton Chemical Corporation, Richmond, VA 23219 (US)
(72) Inventor: Aradi, Allen A., Glen Allen, VA 23059 (US); Huang, C. S. Warren, Richmond, VA 23229 (US)
(74) Representative: Schwabe - Sandmair - Marx

(57) **Abstract**

There is disclosed a composition comprising an alloy represented by the following generic formula Aₐ)ₙ(B_{b})ₙ(C_{c})ₙ(D_{d})ₙ(Eₑ)ₙ(...)ₙ; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein n is greater than or equal to zero; wherein the sum of the n's is equal to or greater than 2, and wherein the alloy comprises at least two different metals. There is also disclosed a washcoat composition; a catalyst support; methods of making the alloy, the washcoat composition, and the catalyst support.

## Description

### Field of the Disclosure

The present disclosure relates to new types of nanoalloy compositions where each composition can comprise an alloy of two or more different metals.

### Background of the Disclosure

Combustion of fossil fuels in internal engines, stationary burners in atmospheric furnaces, boilers, incinerators, and other similar equipment invariably leads to exhaust emissions that contain, amongst other environmental pollutants, CO, hydrocarbons (HC), NOₓ, and particulate matter (PM). To purge these pollutants from the exhaust, catalytic converters have been used in the past. Catalytic converters have the basic composition of a washcoat on a solid support. The washcoat has traditionally been formulated to contain active metal species to catalyze oxidation of pollutants such as CO, HC, and PM into CO₂ and H₂O, and to reduce NOₓ into N₂.

These conventional formulations are limited in performance due to non-ideal dispersion of the active metal species in the washcoat. In some cases, such as where one or more metal species cooperate in the same reaction, the pertinent metals are not located in the same vicinity of the washcoat to readily or ideally participate in the reaction. Moreover, thermal sintering of the dispersed active metal species in the washcoat leads to agglomeration of the active metal species and reduced number of active sites.

Three-way catalysts (TWCs) are used mainly in gasoline burning internal combustion engines operating at stoichiometric and have fuel/air ratio controls that oscillate at stoichiometric between lean and rich excursions. When lean, the TWC is oxidizing (HC, CO, and PM oxidation) and when rich, it is reducing (NOx to N₂). In a traditional TWC, several components are dispersed in an alumina washcoat, such as Al₂O₃, These components include an oxygen storage compound, such as CeO₂; an oxidation catalyst, such as Pt, or Pt/Pd; and a reduction catalyst, such as Rh. Sometimes, the dispersion includes an anti-sintering agent, such as Zr and/or a rare earth metal, which can increase the thermal durability of the catalyst by inhibiting sintering. At no point, do the components in the dispersion form alloys. However, such traditional TWCs can exhibit the problems discussed earlier, such as the metals not being proximal to each other, thermal sintering of the metals, agglomeration, and reduced number of active sites.

Moreover, other emission control catalyst systems, such as lean-NOx traps (LNTs), lean-NO, catalysts (LNCs), oxidation catalysts (OCs), and selective catalytic reduction catalysts (SCRCs) function in a similar manner to TWCs and thus can exhibit similar problems.

What is needed is an alloy that can be used in emission control catalyst systems that addresses at least one of the problems addressed above.

### SUMMARY OF THE DISCLOSURE

In accordance with the disclosure, there is disclosed an alloy represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein each n is independently greater than or equal to zero; wherein the sum of the n's is equal to or greater than 2, and wherein the alloy comprises at least two different metals.

In an aspect, there is also disclosed a washcoat composition comprising (i) at least one metal selected from the group consisting of Al₂O₃, SiO₂, ThO, TiO₂, and mixtures thereof; and (ii) at least one alloy represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent;
wherein each subscript letter represents compositional stoichiometry;
wherein n is greater than or equal to zero; wherein the sum of the n's is equal to or greater than 2, and wherein the alloy comprises at least two different metals.

Moreover, there is disclosed a catalyst support comprising a support having deposited thereon a washcoat composition comprising (i) at least one metal selected from the group consisting of Al₂O₃, SiO₂, ThO, TiO₂, and mixtures thereof; and (ii) at least one alloy represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein n is greater than or equal to zero; wherein the sum of the n's is equal to or greater than 2, and wherein the alloy comprises at least two different metal

Additionally, there is disclosed a method of producing a washcoat composition, said method comprising mixing in a solvent medium to form a sol (i) at least one metal selected from the group consisting of Al₂O₃, SiO₂, ThO, TiO₂, and mixtures thereof; and (ii) at least one alloy, wherein the alloy is represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein n is greater than or equal to zero; wherein the sum of the n's is equal to or greater than 2, and wherein the alloy comprises at least two different metals.

There is also disclosed a method of producing a catalyst support, said method comprising mixing in a solvent medium to form a sol (i) at least one metal selected from the group consisting of Al₂O₃, SiO₂, ThO, TiO₂, and mixtures thereof; and (ii) at least one alloy, wherein the alloy is represented by the following generic formula (Aₐ)ₙ(B_{b})ₙ(C_{c})ₙ(D_{d})ₙ(Eₑ)ₙ(...)ₙ; wherein each capital letter and (...) is a metal;
wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein n is greater than or equal to zero; wherein the sum of the n's is equal to or greater than 2, and wherein the alloy comprises at least two different metals; aging the sol into a gel; treating the gel with high pressure gas; venting the gas under supercritical conditions to form a washcoat composition; and applying the washcoat to a support to produce a catalyst support.

Additional objects and advantages of the disclosure will be set forth in part in the description which follows, and can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

The accompanying drawings, which are incorporated in and constitute a part of this specification, illustrate one (several) embodiment(s) of the disclosure and together with the description, serve to explain the principles of the disclosure.

### BRIEF DESCRIPTION OF THE DRAWINGS

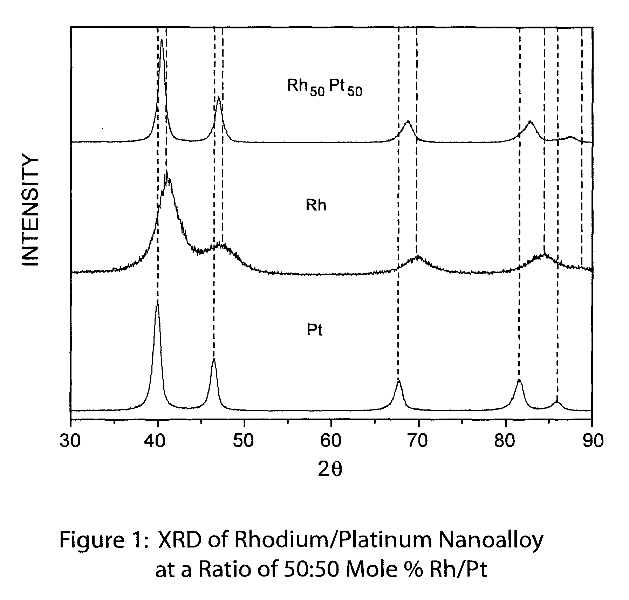

Figures 1-3 illustrate the analytical results of various nanoalloys of the present disclosure.

### DESCRIPTION OF THE EMBODIMENTS

The present disclosure relates in one embodiment to an alloy of two or more metals. As described herein, the alloy is different chemically from any of its constituent metals because it shows a different spectrum in the X-ray diffraction (XRD) than that of the individual constituent metals. In other words, it is not a mixture of different metals, but rather, an alloy of the constituent metals used.

The alloys, such as the disclosed nanoalloys, can be used in main emission control catalysts. Non-limiting examples of such systems include three-way catalysts (TWCs), lean-NOx traps (LNTs), lean-NOx catalysts (LNCs), oxidation catalysts (OCs), and selective catalytic reduction catalysts (SCRCs).

The primary determining factors for activities metals is primarily the type, shape, size, electronic configuration, and energy levels of lowest unoccupied molecular orbitals (LUMO) and highest occupied molecular orbitals (HOMO) made available by the metal to interact with those of the intended substrate species at conditions when these species are to be chemically and physically transformed. These LUMO/HOMO electronic configurations are unique to every metal, hence the innate physics/chemistry uniqueness observed between, for example, Mn and Pt, or Mn and Al, etc.

The disclosed alloy is the result of combining the different constituent metal atoms in the compound. This means that the LUMO/HOMO orbitals of the alloy are hybrids of those characteristic of the respective different metal atoms. Therefore, an alloy, for use in a washcoat, ensures that all constituent metals in the alloy particle end up at the same site and act as one, but in the modified i.e., alloy, form. The advantages of an alloy for this purpose would be due to unique modifications imparted to the LUMO/HOMO electronic and orbital configurations of the particles by the mixing of LUMO/HOMO orbitals of the different respective alloy composite metals. The number and shape of active sites would be expected to also change significantly in the alloy composites relative to the number and shape of active sites in equivalent but non-alloy mixtures. This unique orbital and electronic mixing at the LUMO/HOMO orbital level in the alloys is not possible by simply mixing particles of the respective metals in appropriate functional ratios. This disclosure is directed to alloys present in compositions for multifunctional applications.

Disclosed herein is a composition comprising an alloy represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each n is independently greater than or equal to zero; and wherein the alloy comprises at least two different metals. Thus, the sum of the n's is equal to or greater than 2. In an aspect, the (...) is understood to include the presence of at least one metal other than those defined by A, B, C and D and the respective compositional stoichiometry.

Each capital letter in the above-disclosed formula can be a metal. The metal can be selected from the group consisting of, transition metals, lanthanides, actinides, alkaline earth metals, and alkali metals. In an aspect, each capital letter can be the same or a different metal.

Sources of the metal can include, but are not limited to, their aqueous salts, carbonyls, oxides, organometallics, and zerovalent metal powders. The aqueous salts can comprise, for example, hydroxides, nitrates, acetates, acetonates, ammonium salts, halides, phosphates, phosphonates, phosphites, sulfates, sulfonates, carboxylates, and carbonates.

As disclosed above, A can be an oxygen storage agent. In an aspect, A is or comprises a metal selected from the group consisting of Au, Al, Si, Zr, Ce, and oxides thereof.

As disclosed above, B can be an anti-sintering agent. In an aspect, B is or comprises a metal selected from the group consisting of Zr, La, Y, Yb, Pr, Sc, Lu, Lr and combinations thereof.

As disclosed above, C can be an oxidation catalyst. In an aspect, C is a metal selected from the group consisting of Pt, Pd, Ru, Rh, Os, Ir, Mn, Fe, Co, Cu, Mo, W, La, Ce, Ca, Sr, Ba, and combinations thereof.

As disclosed above, D can be a reduction catalyst. In an aspect, D is a metal selected from the group consisting of Rh, Re, Ru, and combinations thereof.

As disclosed above, E can be a NOₓ absorbing agent. In an aspect, E is or comprises a metal selected from the group consisting of Ba, Sr, Ca, Mg, Cs, Rb, K, Na, Li, Mn, Cu, Zn, Cr, and combinations thereof.

The subscript letters of the disclosed formula represent compositional stoichiometries. For example, for an AₐB_{b}C_{c} alloy, such as Fe_{0.68}Al_{0.25}Ce_{0.07} disclosed herein, a = 0.68, b = 0.25 and c = 0.07.

At numerous places throughout this specification, a number of abbreviations have been used for ease of description to refer to the alloy disclosed herein, including AₐB_{b}, A/B, AₐA'ₐA"ₐ, Aₐ/B_{b}, and variants and combinations thereof. However, it is understood that the alloy discussed herein is represented by the following generic formula: (Aₐ)ₙ(B_{b})ₙ(C_{c})ₙ(D_{d})ₙ(Eₑ)ₙ(...)ₙ, wherein each capital letter and (...) is a metal; wherein A is an oxygen storage agent; B is an anti-sintering agent; C is an oxidation catalyst; D is a reduction catalyst; and E is a NOₓ absorbing agent; wherein each n is independently greater than or equal to zero; wherein the sum of the n's is equal to or greater than 2, and wherein the alloy comprises at least two different metals.

In an aspect, the disclosed alloy can be a nanoalloy. The nanoalloy can have an average particle size of from about 1 to about 100 nanometers, for example, from about 5 to about 75 nanometers, and as a further example from about 10 to about 35 nanometers.

The alloy can be monofunctional such that it can perform any one of the following functions, for example: oxygen storage (Group A metal), anti-sintering agent (Group B metal), oxidation catalyst (Group C metal), reduction catalyst (Group D metal), or NOₓ absorbing agent (Group E metal). The term "Group" is as defined above, and not to be confused with Group in the periodic table.

The alloy can also be bifunctional such that it can perform any two of the functions identified above. In an aspect, the alloy can be trifunctional (i.e., it can perform any three of the functions identified above); tetrafunctional (i.e., it can perform any four of the functions identified above); or polyfunctional (i.e., it can perform any number of the functions identified above as well as those that are undefined).

In an aspect, the disclosed alloy can comprise a metal that can be polyfunctional i.e., it is able to perform at least two functions, such as those identified above. For example, as disclosed below, platinum can function as an oxidation catalyst (Group C metal) and as a reduction catalyst (Group D metal). As a further example, a Ru-Pt alloy would be a bimetallic alloy that is polyfunctional because both the ruthenium and platinum can function as a reduction catalyst and an oxidation catalyst.

In an aspect, the alloy can be a nanoalloy and can be bimetallic (i.e.,, any combination of two different metals from the same or different functional groups, e.g., AₐB_{b}, or AₐA'_{a'}); trimetallic (i.e., any combination of three different metals from the same or different functional groups, e.g., AₐB_{b}C_{c}, or AₐA'_{a'}A"_{a"} or AₐA'_{a'}B_{b}); tetrametallic (i.e., any combination of four different metals from the same or different functional groups, e.g., AₐB_{b}C_{c}D_{d} or AₐA'_{a'}A"_{a"}A"'_{a'"} or AₐB_{b}B'_{b'}C_{c}); or polymetallic (i.e., any combination of two or more metals from the same or different functional groups, e.g., AₐB_{b}C_{c}D_{d}Eₑ...etc. or AₐB_{b}B'_{b},C_{c}D_{d}D'_{d'}Eₑ). The alloy must comprise at least two different metals, but beyond two the number of metals in each alloy would be dictated by the requirements of each specific combustion system and/or exhaust after treatment system.

In an aspect, the composition can comprise an alloy selected from the group consisting of a bimetallic, trimetallic, tetrametallic and polymetallic, and
wherein the alloy is selected from the group consisting of monofunctional, bifunctional, trifunctional, tetrafunctional, and polyfunctional.

Monofunctional nanoalloy compositions can be prepared from any combination of metals within any group A - E as shown in the following non-limiting examples for group C:

Bimetallics (C_{c}C'_{c'}): Pt/Pd, Pt/Ru, Pt/Rh, Pt/Os, Pt/Ce, Pt/Ba, Pd/Ru, Pd/Rh, Pd/Os, Pd/Ce Pd/Ba, Mn/Fe, Mn/Co, Mn/Cu, Mn/Ca, Mn/Rh, Mn/Pd, Mn/Pt, Mn/Ru, Mn/Ce, Fe/Co, Fe/Cu, Fe/Ca, Fe/Rh, Fe/Pd, Fe/Rh, Fe/Pd/, Fe/Pt, Fe/Ru, Fe/Ce, Cu/Co, Cu/Ca, Cu/Rh, Cu/Pd, Cu/Pt, Cu/Ce, Ru/Pt, etc;

Trimetallics (AₐA'_{a'}A"ₐ): Pt/Pd/Ce, Pt/Pd/Rh, PtlPd/Ru, Pt/Rh/Ce, Pt/Rh/Ru, Mn/Fe/Co, Mn/Fe/Cu, Mn/Fe/Ca, etc; and

Polymetallics (AₐA'_{a'}A"_{a"}A'''_{a'''}...etc): Pt/Rh/Ba/Ru/...etc, Mn/Ca/Rh/Pt/...etc, and so forth.

Similar monofunctional bimetallic and polymetallic nanoalloy compositions can be assembled for groups A, B, D, and E respectively, to specifically address thermal sintering (B), oxidation (A), reduction (D), and NOₓ absorption (E).

Polyfunctional alloy compositions can be formed between two or more different metal atoms across the functional groups A, B, C and D as shown in the following non-limiting examples:

Bifunctional (e.g., Aₐ/B_{b}, Aₐ/C_{c}, Aₐ/D_{d}, B_{b}/C_{c}, B_{b}/D_{d}, and C_{c}/D_{d}): Al/Pt, Pt/Rh, Ba/Ru, Ru/Pt, etc.;

Trifunctional (e.g., Aₐ/B_{b}/C_{c}, Aₐ/C_{c}/D_{d}, or B_{b}/C_{c}/D_{d}): Au/Zr/Mn, Al/Mn/Rh, Zr/Pt/Ru, etc.; and

Tetrafunctional (Aₐ/B_{b}/C_{c}/D_{d}): Ce/Zr/Pt/Ru, Al/La/Pd/Rh, etc.

Nanoalloys from combinations, such as AₐB_{b}, can also directly affect emissions. Uniform dispersion of active metal species and increased number of active sites in the catalytic washcoat can lead to improved catalytic function, thus leading to reduced toxicity of environmental pollutants.

Similar combinations can be prepared, for example, for Aₐ/C_{c}, Aₐ/D_{d}, Aₐ/Eₑ, B_{b}/C_{c}, B_{b}/D_{d}, C_{c}/D_{d}, B_{b}/Eₑ, C_{c}/Eₑ, and D_{d}/Eₑ, respectively, to address: oxygen absorption/oxidation (Aₐ/C_{c}), oxygen absorption/reduction (Aₐ/D_{d}), oxygen absorption/NOₓ absorption (AₐEₑ), thermal sintering/oxidation (B_{b}/C_{c}), thermal sintering/NOₓ absorption (B_{b}/D_{d}), oxidation/reduction (C_{c}/D_{d}), thermal sintering/NOₓ absorption (B_{b}/Eₑ), oxidation/NOₓ absorption (C_{c}/Eₑ) and reduction/NOₓ absorption (D_{d}/Eₑ).

The most practical method for bulk preparation of the disclosed alloys is reduction of the aqueous salt mixtures of the respective chosen formulation, using any suitable reductant such as alcohols, primary or secondary amines, alkanolamines, urea, hydrogen, Na- and Li-borahydrides, etc, and an appropriate detergent/dispersant or polymer coater. The reaction conditions require a judicious but readily discernible balance between stoichiometry, temperature, pressure, pH, and dispersant. Other methods of activating a reaction mixture such as sonication, microwave irradiation, plasma, and optically modified electromagnetic radiation (i.e. UV, IR, lasers, etc) can also be used in the preparation of the disclosed nanoalloys. The dispersant can also be the reductant (i.e. alkanolamines where the alcohol functional group does the reduction while the amine group coordinates the reacting nanocluster and controls size through dispersion in the reaction media). The dispersant can also be any chelating molecule with a polar head and a non polar tail.

Manipulation of reaction conditions will determine rate of reaction which will also determine the physical composition of the nanoalloy. For example, fast reaction rates will lead to low density and porous nanoalloys, and slow reaction rates to a denser and less porous product. Porous nanoalloys will find enhanced utility in atmosphere combustion systems, while denser nanoalloys will be better suited for pressurized combustion systems. Such porous nanoalloys are described in Optical Materials, Tsui, Y. Y.; Sun, Y. W., Vol. 29, Issue 8, pp. 1111-1114 (April 2007).

There is thus provided herein a method to produce nanoalloys of reduced density and/or increased porosity, said method comprising accelerating a reaction rate between a reductant and a reacting substrate nanoalloy precursor by increasing the rate of energy input and/or decreasing the pressure on the reacting system. Similarly, there is provided herein a method for producing nanoalloys of increased density and/or reduced porosity, said method comprising decelerating a reaction rate between a reductant and a reacting substrate nanoalloy precursor by decreasing the rate of energy input and/or increasing the pressure on the reacting system. A more specialized method for forming porous nanoalloys is the sol-gel method, such as that developed by the Lawrence Livermore National Laboratory (LLNL).

Another exemplary method that can be suited to bulk preparation of the disclosed nanoalloys is the mechanochemical method where liquid metal precursors are not necessary. Powders of the respective metal components are mixed and physically ground together under temperatures and pressures sufficient to form the alloy. The resultant nanoalloy produced by this method can be of a higher density hence of lower porosity. This reduced surface area will adversely affect gas phase combustion, combustion emissions removal (i.e., SO₃ and NOₓ from flue gases of utility boilers and incinerator furnaces), and deposit modification (slag in furnaces). Such higher density nanoalloys will find enhanced utility in ceramics.

The alloys herein can be formulated into compositions that can be in any form, including but not limited to, crystalline (powder), or liquids (aqueous solutions, hydrocarbon solutions, sols, or emulsions). The liquids can possess the property of being transformable into water/hydrocarbon emulsions using suitable solvents and emulsifier/surfactant combination. The liquids can also be converted into high porosity high surface area powders to form catalytically activated washcoat powders.

In an aspect, there is disclosed a washcoat composition comprising (i) at least one metal selected from the group consisting of Al₂O₃, SiO₂, ThO, TiO₂, and mixtures thereof; and (ii) at least one alloy represented by the following generic formula (Aₐ)ₙ(B_{b})ₙ(C_{c})ₙ(D_{d})ₙ(Eₑ)ₙ(... )ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein each n is independently greater than or equal to zero; the sum of the n's is equal to or greater than 2; and wherein the alloy comprises at least two different metals. In an embodiment, the average particle size of the alloy ranges from about 1 to 100 nanometers, for example, from about 5 to about 75 nanometers.

It is envisioned that the washcoat composition can comprise at least one alloy, for example two alloys, or even three alloys. In an embodiment wherein the washcoat composition comprises two or more alloys, the two or more alloys can be the same or different. Non-limiting examples of alloys for use in the disclosed washcoat include those represented by the following generic formulae:
(Aₐ)ₙ(B_{b})ₙ(C_{c})ₙ, (B_{b})ₙ(D_{d})ₙ, (B_{b})ₙ(C_{c})ₙ(Eₑ)ₙ, (Aₐ)ₙ(Eₑ)ₙ, (Aₐ)ₙ(B_{b})ₙ(Eₑ)ₙ, and
(Aₐ)ₙ(B_{b})ₙ(D_{d})ₙ, wherein the variables are as defined above.

The disclosed washcoat composition can be prepared by any suitable method know to those of ordinary skill in the art. In an aspect, the washcoat composition can be prepared by, for example, mixing in a solvent medium to form a sol (i) at least one metal selected from the group consisting of Al₂O₃, SiO₂, ThO, TiO₂, and mixtures thereof; and (ii) at least one alloy, wherein the alloy is represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein each n is independently greater than or equal to zero; and wherein the alloy comprises at least two different metals. In an aspect, the (i) at least one metal and the (ii) at least one alloy are homogenously dispersed in the sol.

The disclosed method for making the washcoat composition can further comprise aging the sol into a gel; treating the gel with high pressure gas, such as carbon dioxide; and venting the high pressure gas under supercritical conditions. One of ordinary skill in the art would know what the supercritical conditions are for carbon dioxide, for example a temperature at least above about 31.1 °C and pressure at least above about 73 atm.

The disclosed washcoat composition can then be applied to a support to form a catalytic support, such as a catalytic converter. In an aspect, the catalyst support can comprise a support having deposited thereon a washcoat composition comprising (i) at least one metal selected from the group consisting of Al₂O₃, SiO₂, ThO, TiO₂, and mixtures thereof; and (ii) at least one alloy represented by the following generic formula (Aₐ)ₙ(B_{b})ₙ(C_{c})ₙ(D_{d})ₙ(Eₑ)ₙ(...)ₙ; wherein each capital letter and (...) is a metal; wherein A is an oxygen storage agent; B is an anti-sintering agent; C is an oxidation catalyst; D is a reduction catalyst; and E is a NOₓ absorbing agent; wherein each subscript letter represents compositional stoichiometry; wherein each n is independently greater than or equal to zero; and wherein the alloy comprises at least two different metals. The support can be chosen from, for example, an aluminosilicate, boron-nitride, silicon carbide, zeolites or other ceramic monolith and a stainless steel monolith. In an embodiment, the support can be in the form of a porous aluminosilicate zeolite with a high silica content, for example, as described in Advanced Ceramics Support, published June 1, 2007.

In another aspect, there is disclosed a method of improving dispersion of active metal species in a washcoat composition, said method comprising providing to the washcoat composition the disclosed alloy. Moreover, there is also disclosed a method of reducing agglomeration of active metal species in a washcoat composition, said method comprising providing to the washcoat composition the disclosed alloy. Further, there is disclosed a method of increasing active sites of active metal species in a washcoat composition, said method comprising providing to the washcoat composition the disclosed alloy.

The catalytic support, such as a catalytic converter, can be used in a variety of exhaust after-treatment systems including, but not limited to, all combustion systems that burn gaseous, liquid, and solid fuels, and renewable fuels, and mixture thereof. Non-limiting examples include three-way catalysts (TWCs), such as for stoichimetric charge feed combustion systems, lean-NOₓ traps (LNTs), lean-NOₓ catalysts (LNCs), selective catalytic reduction catalysts (SCRs) , such as for lean-burn variable pressure engines (i.e., diesel engines, leart-burn spark ignited engines, etc.), oxidation catalysts (OCs), diesel oxidation catalysts (DOCs), industrial burners in boilers, incinerators, furnaces, and lean-burn atmospheric burners (i.e., utility furnaces, industrial furnaces, boilers, and incinerators). As used herein, the term "after-treatment system" is used to mean any system, device, method, or combination thereof that acts on the exhaust stream or emissions resulting from the combustion of gaseous, liquid, and solid fossil fuels, renewable fuels, and mixtures thereof.

The disclosed alloys can also be used in other systems, such as those of atmospheric combustion used in utility and industrial burners, boilers, furnaces, and incinerators. These systems can burn from natural gas to liquid fuels (#5 fuel oil and heavier), to solid fuels (coals, wood chips, burnable solid wastes, etc).

In an aspect there is disclosed, the use in the combustion of a fuel, or the treatment of combustion by-products resulting from said combustion, wherein said use comprises contacting the disclosed alloy with the fuel or the by-products. Moreover, there is disclosed a use of an alloy to reduce the amount of at least one of CO, HC, NOₓ, and PM, wherein said use comprises providing to an exhaust after-treatment system a catalytic support comprising the disclosed washcoat comprising the disclosed alloy. There is further disclosed the use of an alloy to increase at least one of oxygen storage, anti-sintering, oxidation, reduction, and NOₓ absorbing,
wherein said use comprises providing at least one alloy to the disclosed washcoat composition.

It is to be understood that the reactants and components referred to by chemical name anywhere in the specification or claims hereof, whether referred to in the singular or plural, are identified as they exist prior to coming into contact with another substance referred to by chemical name or chemical type (e.g., base fuel, solvent, etc.). It matters not what chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus, the reactants and components are identified as ingredients to be brought together either in performing a desired chemical reaction (such as formation of the organometallic compound) or in forming a desired composition (such as a washcoat composition). Accordingly, even though the claims hereinafter may refer to substances, components and/or ingredients in the present tense ("comprises", "is", etc.), the reference is to the substance, components or ingredient as it existed at the time just before it was first blended or mixed with one or more other substances, components and/or ingredients in accordance with the present disclosure. The fact that the substance, components or ingredient may have lost its original identity through a chemical reaction or transformation during the course of such blending or mixing operations or immediately thereafter is thus wholly immaterial for an accurate understanding and appreciation of this disclosure and the claims thereof.

It is believed that the disclosed alloys can enable active components in the catalyst support function cooperatively due to their intimate location together in functional units, such as nano units, which can also be homogeneously dispersed in the washcoat composition. The surface and the porosity of the washcoat can be modulated by using nanotechnology methods of preparation known to those of ordinary skill in the art. Moreover, the dispersion of the functional units can be maintained by including anti-sintering agents in the precursor to the desired alloy, before the alloy is made.

Further, for LNCs where the active NOx reduction catalyst in lean-burn conditions, i.e., ruthenium, form volatile compounds and leave the catalyst washcoat, alloying Ru with other components of the LNC composition can convert the Ru to an alloy with different volatility characteristics.

The following examples further illustrate aspects of the present disclosure but do not limit the present disclosure.

### EXAMPLES

EXAMPLE 1 - Nanoalloys

Several nanoalloys were prepared using known techniques. All chemicals were purchased from Aldrich: (Platinum (IV) chloride, Rhodium (III) acetylacetonate, Ruthenium (III) chloride, Oleylamine 70% technical grade (OAm) and Oleic acid 90% technical grade (OAc)) were used without any further purification. A conventional microwave (800 W) was used in all the nanoalloy synthesis.

In a typical reaction, a mixture of OAm and OAc with a certain mole ratio were heated in an oil bath at 110 °C under stirring. Equimolar amounts of PtCl4 and Rh(acac)3 or RuCl3 were added quickly to the above mixture under stirring to give a clear solution. The resulting solution was placed in a conventional microwave with the power set to 100% of 800 W and operated in 80 s cycles (on for 60 s, off and stirring for 20 s) for total microwaving times that varied from 5-10 min. After microwaving for desired time, the resultant solution was flocculated in ethanol or acetone, centrifuged, and washed well with ethanol and ethanol- toluene mixture several times. The resultant solid was re-dispersed in a hydrophobic solvent, such as toluene, dichloromethane and chloroform.

For the Preparation of Rh₅₀Pt₅₀ as illustrated in Figure 1: 15ml OAm + 5ml OAc + (0.2g Rh(acac)3 + 0.1683 g PtCl4)

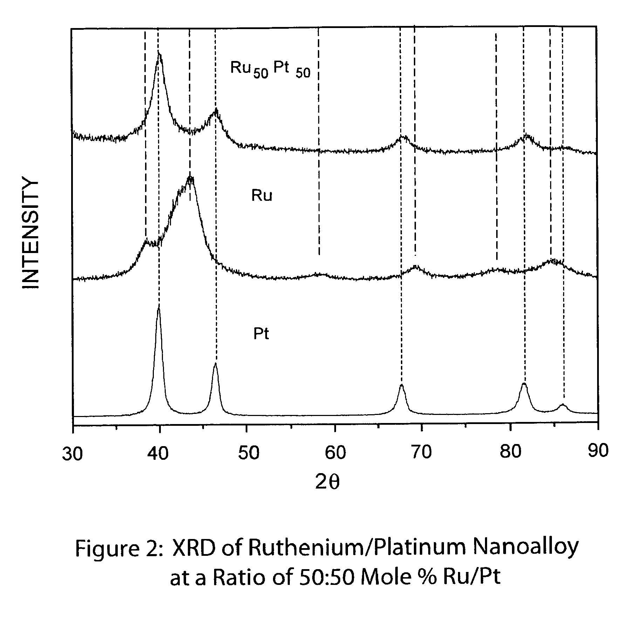

For the Preparation of Ru₅₀Pt₅₀ as illustrated in Figure 2: 15ml OAm + 5ml OAc + (0.1036g RuCl3 + 0.1683 g PtCl4)

For the Preparation of Pt, Rh and Ru: 10ml OAm + 5ml OAc + (0.1036g RuCl3 or 0.1683 g PtCl4 or 0.2 g Rh(acac)3)

The nanoalloys of the present disclosure were prepared by combining desired metals and using appropriate nanoalloy chemistries (e.g., those described herein) to convert the metals into a nanoalloy. The nanoalloys had the following compositions:

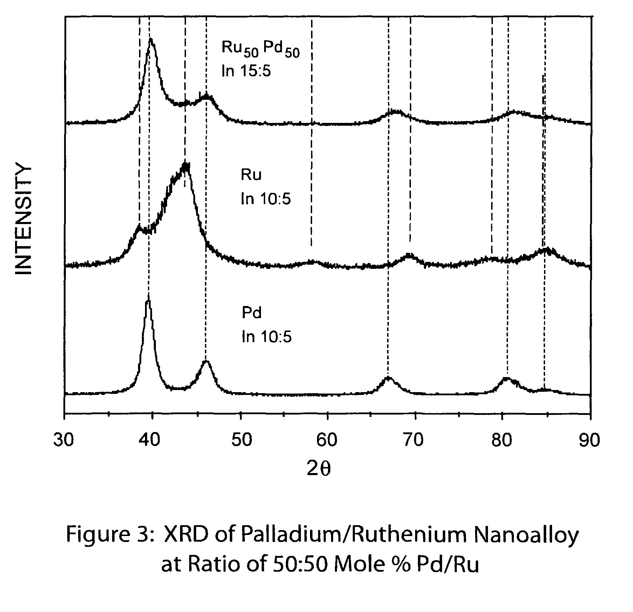

Ru₅₀Pd₅₀ as illustrated in Figure 3

Ce₆₆Al₈O₂₆

Ce₆₇Al₄Fe₇O₂₁

Fe_{0.68}Al_{0.25}Ce_{0.07}

FeCe₂

Fe₃Ce₄Na₉

Mn₂Ce₇

Ce₂CuNa₃

Ce₂CuAl₃

Fe₃Cu₄Na₁₃

Other examples of desired combinations that one skilled in the art could use to produce a nanoalloy of the present invention include an oxidation catalyst (such as Pt, Pd, Ru, Rh, Os, Ir, Mn, Fe, Co, Cu, Mo, W, La, Ce, Ca, Sr, and Ba), an anti-sintering agent (such as Zr, La, Y, Yb, Pr, Sc, Lu, and Lr), and cesium oxide (CeO₂) Another example of desired combinations can be a reduction catalyst (such as Rh, Re, and Ru) and an anti-sintering agent. A further example can be the combination of a NOₓ absorbing agent (such as Ba, Sr, Ca, Mg, Cs, Rb, K, Na, Li, Mn, Cu, Zn, and Cr), an anti-sintering agent, and an oxidation promoting agent.

The prepared nanoalloys were confirmed by XRD, TEM, and SEM-EDS. The average particle sizes of these nanoalloys ranged from about 5 to about 25 nanometers landing them comfortably in the nanosize range which has an upper limit of about 100 nm. TEM, SEM-EDS and XRD confirmed them to be either homogeneous nanoalloys, or contact nanolloys, where all metal components are represented in the XRD unit cell. This is not the case with mixtures or "doped" mixed metal compositions.

EXAMPLE 2 - Nanoalloy Three Way Catalysts (TWCs)

One of ordinary skill in the art could produce a washcoat sol by mixing the aqueous precursors to Al₂O₃, or SiO₂, or ThO, or TiO₂, or mixtures thereof by known solution methods. One of ordinary skill in the art could then separately prepare nanoalloys of (Aₐ)ₙ(B_{b})ₙ(C_{c})ₙ(D_{d})ₙ(Eₑ)ₙ(...)ₙ, as defined above, in the desired stoichiometries. In this case emphasis could be on A, B, C, and D, with E being zero. The prepared nanoalloys could then be dispersed into the washcoat sol. The resultant nanoalloy sol can be aged into the corresponding gel and treated with CO₂ under high pressure. The gel can then be brought to supercritical conditions and the CO₂ can be gradually vented while maintaining supercritical conditions. The final active-metal loaded washcoat can then be applied to a support to form a catalytic converter to be used in exhaust emissions control systems such as TWCs.

EXAMPLE 3 - Nanoalloy Lean NOₓ Traps (LNTs) and Lean NOₓ Catalysts (LNCs)

One skilled in the art could make a slurry of a washcoat, an oxygen storage agent (A) and a NOₓ absorbing agent (E) using conventional means. Separate alloys of B/C/E and B/D can be prepared in a solvent medium compatible with the previously disclosed slurry. All three preparations can then be mixed to form a homogenous dispersion, which can then be loaded onto a support.

In another embodiment, the at least one washcoat metal precursor in a sol-form can be combined with at least one of an NOx absorbing agent (E), an anti-sintering agent (B), and an oxidation catalyst (C), which could be dissolved in a medium compatible with the sol before being made into an alloy. A second nanoalloy can also be prepared, such as A/B/D. The two nanoalloy compositions can be mixed washcoat sol to form a single sol solution. The nanoalloy loaded sol can then be allowed to age to the gel form, which can be finally converted to a high porosity high surface area powder, This catalytically activated washcoat powder can then be loaded onto a support which may be in the form of, for example, an aluminosilicate, boron nitride, silicon carbide, zeolite or other ceramic monolith, or a metal-based support system, or beads. In an embodiment, the washcoat support can be in the form of a porous aluminosilicate zeolite with a high silica content.

At numerous places throughout this specification, reference has been made to a number of U.S. patents, published foreign patent applications and published technical papers. All such cited documents are expressly incorporated in full into this disclosure as if fully set forth herein.

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

It is noted that, as used in this specification and the appended claims, the singular forms "a," "an," and "the," include plural referents unless expressly and unequivocally limited to one referent. Thus, for example, reference to "an antioxidant" includes two or more different antioxidants. As used herein, the term "include" and its grammatical variants are intended to be non-limiting, such that recitation of items in a list is not to the exclusion of other like items that can be substituted or added to the listed items.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

Applicant does not intend to dedicate any disclosed embodiments to the public, and to the extent any disclosed modifications or alterations may not literally fall within the scope of the claims, they are considered to be part of the invention under the doctrine of equivalents.

### The Invention also relates to the following embodiments:

1. An alloy represented by the following generic formula

   (Aₐ)ₙ(B_{b})ₙ(C_{c})ₙ(D_{d})ₙ(Eₑ)ₙ(...)ₙ;

   wherein each capital letter and (...) is a metal;
   wherein A is an oxygen storage agent; B is an anti-sintering agent; C is an oxidation catalyst; D is a reduction catalyst; and E is a NOₓ absorbing agent;
   wherein each subscript letter represents compositional stoichiometry;
   wherein each n is independently greater than or equal to zero;
   wherein the sum of the n's is equal to or greater than 2, and
   wherein the alloy comprises at least two different metals.
2. The alloy of embodiment 1, wherein the metal is selected from the group consisting of transition metals, lanthanides, actinides, alkaline earth metals, and alkali metals.
3. The alloy of embodiment 1, wherein A is selected from the group consisting of Au, Al, Si, Zr, Ce, and oxides thereof.
4. The alloy of embodiment 1, wherein B is selected from the group consisting of Zr, La, Y, Yb, Pr, Sc, Lu, Lr, and combinations thereof.
5. The alloy of embodiment 1, wherein C is selected from the group consisting of Pt, Pd, Ru, Rh, Os, Ir, Mn, Fe, Co, Cu, Mo, W, La, Ce, Ca, Sr, Ba, and combinations thereof.
6. The alloy of embodiment 1, wherein D is selected from the group consisting of Rh, Re, and Ru.
7. The alloy of embodiment 1, wherein E is selected from the group consisting of Ba, Sr, Ca, Mg, Cs, Rb, K, Na, Li, Mn, Cu, Zn, and Cr.
8. The alloy of embodiment 1, wherein the average particle size is from about 1 to about 100 nanometers.
9. The alloy of embodiment 1, wherein the average particle size is from about 5 to about 75 nanometers.
10. The alloy of embodiment 1, wherein the alloy is bimetallic.
11. The alloy of embodiment 1, wherein the alloy is trimetallic.
12. The alloy of embodiment 1, wherein the alloy is tetrametallic.
13. The alloy of embodiment 1, wherein the alloy is polymetallic.
14. The alloy of embodiment 1, wherein the alloy is monofunctional.
15. The alloy of embodiment 1, wherein the alloy is bifunctional.
16. The alloy of embodiment 1, wherein the alloy is trifunctional.
17. The alloy of embodiment 1, wherein the alloy is tetrafunctional.
18. The alloy of embodiment 1, wherein the alloy is polyfunctional.
19. The alloy of embodiment 1, wherein the alloy is selected from the group consisting of bimetallic, trimetallic, tetrametallic, and polymetallic; and
   wherein the alloy is selected from the group consisting of monofunctional, bifunctional, trifunctional, tetrafunctional, and polyfunctional.
20. A washcoat composition comprising:
   (i) at least one metal selected from the group consisting of Al₂O₃, SiO₂, ThO, TiO₂, and mixtures thereof; and
   (ii) at least one alloy represented by the following generic formula

      (Aₐ)ₙ(B_{b})ₙ(C_{c})ₙ(D_{d})ₙ(Eₑ)ₙ(...)ₙ;
   wherein each capital letter and (...) is a metal;
   wherein A is an oxygen storage agent; B is an anti-sintering agent; C is an oxidation catalyst; D is a reduction catalyst; and E is a NOₓ absorbing agent;
   wherein each subscript letter represents compositional stoichiometry;
   wherein n is greater than or equal to zero;
   wherein the sum of the n's is equal to or greater than 2, and
   wherein the alloy comprises at least two different metals.
21. The washcoat composition of embodiment 20, wherein the alloy is a nanoalloy comprising an average particle size of from about 1 to about 100 nanometers.
22. The washcoat composition of embodiment 20, wherein the alloy is a nanoalloy comprising an average particle size of from about 5 to about 75 nanometers.
23. The washcoat composition of embodiment 20, wherein the (ii) at least one alloy is represented by the following generic formula:

   (Aₐ)ₙ(B_{b})ₙ(C_{c})ₙ.
24. The washcoat composition of embodiment 20, wherein the (ii) at least one alloy is represented by the following generic formula:

   (B_{b})ₙ(D_{d})ₙ.
25. The washcoat composition of embodiment 20, wherein the (ii) at least one alloy is represented by the following generic formula:

   (B_{b})ₙ(C_{c})ₙ(Eₑ)ₙ.
26. The washcoat composition of embodiment 20, wherein the (ii) at least one alloy is represented by the following generic formula:

   (Aₐ)ₙ(Eₑ)ₙ.
27. The washcoat composition of embodiment 20, wherein the (ii) at least one alloy is represented by the following generic formula:

   (Aₐ)ₙ(B_{b})ₙ(Eₑ)ₙ.
28. The washcoat composition of embodiment 20, wherein the (ii) at least one alloy is represented by the following generic formula:

   (Aₐ)ₙ(B_{b})ₙ(D_{d})ₙ.
29. A catalytic support comprising:
   a support having deposited thereon a washcoat composition comprising
      (i) at least one metal selected from the group consisting of Al₂O₃, SiO₂ ThO, TiO₂, and mixtures thereof; and
      (ii) at least one alloy represented by the following generic formula

         (Aₐ)ₙ(B_{b})ₙ(C_{c})ₙ(D_{d})ₙ(Eₑ)ₙ(...)ₙ;
   wherein each capital letter and (...) is a metal;
   wherein A is an oxygen storage agent; B is an anti-sintering agent; C is an oxidation catalyst; D is a reduction catalyst; and E is a NOₓ absorbing agent;
   wherein each subscript letter represents compositional stoichiometry;
   wherein n is greater than or equal to zero;
   wherein the sum of the n's is equal to or greater than 2, and
   wherein the alloy comprises at least two different metals.
30. The catalytic support of embodiment 29, wherein the support comprises a ceramic monolith or stainless steel monolith.
31. The catalytic support of embodiment 29, wherein the support comprises a monolith selected from the group consisting of aluminosilicates, boron-nitrides, silicon carbides, zeolites, and combinations thereof.
32. The catalytic support of embodiment 29, wherein the support comprises a porous aluminosilicate zeolite with a high silica content.
33. A method of producing a washcoat composition, said method comprising:
   mixing in a solvent medium to form a sol (i) at least one metal selected from the group consisting of Al₂O₃, SiO₂, ThO, TiO₂, and mixtures thereof; and (ii) at least one alloy, wherein the alloy is represented by the following generic formula

      (Aₐ)ₙ(B_{b})ₙ(C_{c})ₙ(D_{d})ₙ(Eₑ)ₙ(...)ₙ;
   wherein each capital letter and (...) is a metal;
   wherein A is an oxygen storage agent; B is an anti-sintering agent; C is an oxidation catalyst; D is a reduction catalyst; and E is a NOₓ absorbing agent;
   wherein each subscript letter represents compositional stoichiometry;
   wherein n is greater than or equal to zero;
   wherein the sum of the n's is equal to or greater than 2, and
   wherein the alloy comprises at least two different metals.
34. The method of embodiment 33, further comprising aging the sol into a gel.
35. The method of embodiment 34, further comprising treating the gel with high pressure carbon dioxide.
36. The method of embodiment 35, further comprising venting the high pressure carbon dioxide under supercritical conditions.
37. The method of embodiment 33, wherein the (i) at least one metal and the (ii) at least one alloy are homogenously dispersed in the sol.
38. A method of producing a catalytic support, said method comprising:
   mixing in a solvent medium to form a sol of (i) at least one metal selected from the group consisting of Al₂O₃, SiO₂, ThO, TiO₂, and mixtures thereof; and (ii) at least one alloy, wherein the alloy is represented by the following generic formula

      (Aₐ)ₙ(B_{b})ₙ(C_{c})ₙ(D_{d})ₙ(Eₑ)ₙ(...)ₙ;

      wherein each capital letter and (...) is a metal;
      wherein A is an oxygen storage agent; B is an anti-sintering agent; C is an oxidation catalyst; D is a reduction catalyst; and E is a NOₓ absorbing agent;
      wherein each subscript letter represents compositional stoichiometry;
      wherein n is greater than or equal to zero;
      wherein the sum of the n's is equal to or greater than 2, and
      wherein the alloy comprises at least two different metals;
   aging the sol into a gel;
   treating the gel with high pressure carbon dioxide;
   venting the carbon dioxide under supercritical conditions to form a washcoat composition;
   and applying the washcoat to a support to produce a catalytic support.
39. A method of improving dispersion of active metal species in a washcoat composition, said method comprising providing to the washcoat composition the alloy of embodiment 1.
40. A method of reducing agglomeration of active metal species in a washcoat composition, said method comprising providing to the washcoat composition the alloy of embodiment 1.
41. A method of increasing active sites of active metal species in a washcoat composition, said method comprising providing to the washcoat composition the alloy of embodiment 1.
42. The method of embodiment 38, wherein the catalytic support has reduced density and/or increased porosity relative to the density and/or porosity of a conventional catalytic support, said method comprising increasing the rate of reaction between a reductant and a reacting substrate, whereby the resulting catalyst support has reduced density and/or increased porosity relative to the density and/or porosity of a catalytic support prepared from a lower reaction rate between a reductant and a reacting substrate.
43. The method of embodiment 38, wherein the catalytic support has increased density and/or decreased porosity relative to the density and/or porosity of a conventional catalytic support, said method comprising decreasing the rate of reaction between a reductant and a reacting substrate, whereby the resulting catalytic support has increased density and/or decreased porosity relative to the density and/or porosity of a catalytic support prepared from a higher reaction rate between a reductant and a reacting substrate.

## Claims

1. An alloy represented by the following generic formula
(Aₐ)ₙ(B_{b})ₙ(C_{c})ₙ(D_{d})ₙ(Eₑ)ₙ(...)ₙ;
wherein each capital letter and (...) is a metal;
wherein A is an oxygen storage agent; B is an anti-sintering agent; C is an oxidation catalyst; D is a reduction catalyst; and E is a NOₓ absorbing agent;
wherein each subscript letter represents compositional stoichiometry;
wherein each n is independently greater than or equal to zero;
wherein the sum of the n's is equal to or greater than 2, and
wherein the alloy comprises at least two different metals.

2. The alloy of claim 1, wherein the metal is selected from the group consisting of transition metals, lanthanides, actinides, alkaline earth metals, and alkali metals.

3. The alloy of claim 1 or 2, wherein A is selected from the group consisting of Au, Al, Si, Zr, Ce, and oxides thereof.

4. The alloy of any one of claims 1 to 3, wherein B is selected from the group consisting of Zr, La, Y, Yb, Pr, Sc, Lu, Lr, and combinations thereof.

5. The alloy of any one of claims 1 to 4, wherein C is selected from the group consisting of Pt, Pd, Ru, Rh, Os, Ir, Mn, Fe, Co, Cu, Mo, W, La, Ce, Ca, Sr, Ba, and combinations thereof.

6. The alloy of any one of claims 1 to 5, wherein D is selected from the group consisting of Rh, Re, and Ru,

7. The alloy of any one of claims 1 to 6, wherein E is selected from the group consisting of Ba, Sr, Ca, Mg, Cs, Rb, K, Na, Li, Mn, Cu, Zn, and Cr.

8. The alloy of any one of claims 1 to 7, wherein the average particle size is from about 1 to about 100 nanometers, preferably from about 5 to about 75 nanometers.

9. The alloy of any one of claims 1 to 8, wherein the alloy is selected from the group consisting of bimetallic, trimetallic, tetrametallic, and polymetallic; and/or
selected from the group consisting of monofunctional, bifunctional, trifunctional, tetrafunctional, and polyfunctional.

10. A washcoat composition comprising:
(i) at least one metal selected from the group consisting of Al₂O₃, SiO₂, ThO, TiO₂, and mixtures thereof; and
(ii) at least one alloy according to any one of claims 1 to 9

11. The washcoat composition of claim 10, wherein the (ii) at least one alloy is represented by one of the following generic formulae:
(Aₐ)ₙ(B_{b})ₙ(C_{c})ₙ;
(B_{b})ₙ(D_{d})ₙ;
(B_{b})ₙ(C_{c})ₙ(Eₑ)ₙ;
(Aₐ)ₙ(Eₑ)ₙ;
(Aₐ)ₙ(B_{b})ₙ(Eₑ)ₙ;
(Aₐ)ₙ(B_{b})ₙ(D_{d})ₙ;

12. A catalytic support comprising:
a support having deposited thereon a washcoat composition according to claim 10 or 11.

13. The catalytic support of claim 12, wherein the support comprises a stainless steel monolith or a ceramic monolith, in particular a monolith selected from the group consisting of aluminosilicates, boron-nitrides, silicon carbides, zeolites, and combinations thereof, preferably a porous aluminosilicate zeolite with a high silica content.

14. A method of producing a washcoat composition, said method comprising:
mixing in a solvent medium to form a sol (i) at least one metal selected from the group consisting of Al₂O₃, SiO₂, ThO, TiO₂, and mixtures thereof; and (ii) at least one alloy according to any one of claims 1 to 9,
optionally wherein the (i) at least one metal and the (ii) at least one alloy are homogenously dispersed in the sol.

15. The method of claim 14, further comprising one or more of the following steps:
a) aging the sol into a gel;
b) treating the gel with high pressure carbon dioxide;
c) venting the high pressure carbon dioxide under supercritical conditions.

16. A method of producing a catalytic support, said method comprising:
mixing in a solvent medium to form a sol of (i) at least one metal selected from the group consisting of Al₂O₃, SiO₂, ThO, TiO₂, and mixtures thereof; and (ii) at least one alloy according to any one of claims 1 to 9;
aging the sol into a gel;
treating the gel with high pressure carbon dioxide;
venting the carbon dioxide under supercritical conditions to form a washcoat composition;
and applying the washcoat to a support to produce a catalytic support.
